# EUROPÄISCHE PATENTSCHRIFT

(11) **EP 0 393 552 B1**
(45) Veröffentlichungstag und Bekanntmachung des Hinweises auf die Patenterteilung: **16.02.1994**
(21) Anmeldenummer: 90107155.5
(22) Anmeldetag: 14.04.1990
(51) Int. Cl.: H02G 15/00, G02B 6/36

(54) **Aufschiebbare Garnitur für kunststoffisolierte Mittelspannungskabel mit mehreren integrierten Lichtwellenleitern**
Sliding fitting for plastic-insulated medium voltage cable having multiple integrated optical fibre conductors
Garniture enfilable pour câbles à tension moyenne isolés par des matières synthétiques ayant plusieurs conducteurs optiques intégrés

(30) Priorität: 21.04.1989 DE 3913057
(43) Veröffentlichungstag der Anmeldung: 24.10.1990
(73) Patentinhaber: Felten & Guilleaume Energietechnik AG, D-51058 Köln (DE)
(72) Erfinder: Amerpohl, Uwe, Dipl.-Ing., D-5060 Bergisch Gladbach 2 (DE); Beck, Manfred, Dipl.-Ing., D-5000 Köln 90 (DE); Brülls, Johannes, D-5253 Lindlar-Schmitzhöhe (DE)

(56) Entgegenhaltungen:
- DE-A- 3 732 024
- DE-U- 8 901 972
- US-A- 4 545 645
- US-A- 4 784 459

## Beschreibung

Die Erfindung betrifft eine aufschiebbare Garnitur (Endverschluß oder Verbindungsmuffe) für kunststoffisolierte Mittelspannungskabel mit mehreren integrierten Lichtwellenleitern (LWL), kurz MSL-Kabel genannt, wobei das Kabel mindestens ein im Schirm eingeseiltes Schutzröhrchen hat, in das mehrere LWL lose eingelegt sind, und auf das jeweilige, stufenweise abgesetzte Kabelende ein Feldsteuerkörper aus Silikonkautschuk aufgeschoben ist.

Eine solche Garnitur für MSL-Kabel wurde in der DE-U1 89 01 972 vorgeschlagen. Dort sind für MSL-Kabel mit einem LWL die grundsätzliche Ausführung der Kabelgarnitur, die Besonderheiten der Garnituren Endverschluß und Verbindungsmuffe sowie die Einzelheiten hierzu und zum LWL-Spleiß angegeben. Schließlich ist kurz erwähnt, daß bei MSL-Kabeln mit mehreren LWL anstelle des schlauchförmigen LWL-Spleißgehäuses ein schachtelförmiges Gehäuse angeordnet und in die Garnitur eingebunden sein kann. Weitere Angaben hierzu fehlen. Der Anmelder hat sich unter Bezugsnahme auf die o.g. Gebrauchmusteranmeldung DE-U1-8901972 freiwillig eingeschränkt und gesonderte Patentansprüche für Deutschland vorgelegt.

LWL-Spleißgehäuse sind bekannt. Ein solches ist auch bereits bei einer Verbindungsmuffe für ein VPE-isoliertes 20 kV-Kabel mit mehreren - von einem Stahlröhrchen umgebenen und im Schirm des Kabels eingeseilten - LWL auf der Hannover-Messe Industrie 1988 vorgestellt worden (Z. Elektrizitätswirtschaft, Jg. 87 (1988) S. 699). Hier ist jedoch das LWL-Spleißgehäuse außerhalb der eigentlichen Energiekabel-Verbindungsmuffe angeordnet, und beide sind von einem zusätzlichen Schutzgehäuse umgeben, was eine ganz spezielle Ausführungsform ist.

Der Erfindung liegt die Aufgabe zugrunde, eine Kabelgarnitur für kunststoffisolierte Mittelspannungskabel mit mehreren integrierten LWL, die insbesondere in einem im Kabelschirm eingeseilten Schutzröhrchen (LWL-Röhrchen) liegen, so auszubilden, daß sie in einer einfachen und leicht abwandelbaren Form für verschiedene Garnituren- und Kabeltypen einsetzbar ist.

Die Lösung dieser Aufgabe ist mit den kennnzeichnenden Merkmalen des Anspruchs 1 angegeben. Sie besteht im wesentlichen darin, daß kabelseitig neben dem Feldsteuerkörper um den Kabelschirm ein Hilfswickel aufgebracht und hierüber jedes LWL-Röhrchen zu einem Spleißgehäuse hingeführt ist, das kabelseitig neben dem Hilfswickel um den Kabelmantel oder um ein Muffenrohr als ein flaches und längliches (schachtelförmiges), einen Teil des Umfangs umfassendes, biegbares Gehäuse angeordnet ist, in dem die Spleiße und Mehrlängen der LWL untergebracht sind. Das mit einer Abdeckplatte verschlossene Spleißgehäuse kann aus Metall gefertigt sein. Die Vorteile einer einfachen Fertigung und vielseitigen Einsatzmöglichkeit werden jedoch vergrößert, wenn es in einem Stück aus einem elastomeren Kunststoff, vorzugsweise aus Silikonkautschuk, gefertigt wird.

Die Ansprüche 2 bis 4 betreffen Einzelheiten der Garnituren für MSL-Kabel mit mehreren LWL, so der Anspruch 2 einen Endverschluß, 3 eine Verbindungsmuffe und 4 diese Muffe mit einem Spleißgehäuse aus Metall. Die Ansprüche 5 und 6 betreffen das Spleißgehäuse aus Metall oder Kunststoff. Die Ansprüche 7 bis 10 betreffen das Spleißgehäuse aus Kunststoff, so der Anspruch 7 die einstückige Ausführung, 8 konstruktive Einzelheiten, 9 die Abdeckplatte und 10 die Montage auf dem Kabel. Schließlich betrifft der Anspruch 11 die Montage des LWL-Spleißgehäuses unabhängig von der Mittelspannungs-Kabelgarnitur.

Der mit der Erfindung erzielte Vorteil besteht im wesentlichen darin, daß eine Kabelgarnitur für MSL-Kabel mit mehreren LWL in einer einfachen und leicht abwandelbaren Form für verschiedene Garnituren und Kabeltypen ausgebildet ist.

Ein schachtelförmiges Spleißgehäuse anstelle des für einen LWL eingesetzten schlauchförmigen Spleißgehäuses behebt folgende Schwierigkeiten: a) Während des Spleißvorgangs am zweiten LWL muß der bereits gespleißte LWL um das Spleißgerät herumgeführt werden, was relativ viel Länge erfordert. b) Um eine ähnliche Spleißtechnik wie bei einem LWL anwenden zu können, müßten die LWL genau die gleiche Länge haben, was schwierig zu machen ist. Und c) Die Handhabung der beiden LWL ist problematisch, so daß leicht Beschädigungen auftreten können.

Mehrere Ausführungsbeispiele der Erfindung sind in der Zeichnung dargestellt und werden im folgenden näher beschrieben. Es zeigen
- Fig. 1 einen Endverschluß für ein Einleiter-VPE-Kabel mit einem im Schirm eingeseilten Stahlröhrchen, in dem mehrere LWL liegen, und mit einem schachtelförmigen, biegbaren LWL-Spleißgehäuse,
- Fig. 2 eine Verbindungsmuffe für zwei solche Kabel, beide Figuren in teilweise aufgebrochener Seitenansicht,
- Fig. 3a und 3b ein noch nicht gebogenes LWL-Spleißgehäuse aus Metall ohne Abdeckplatte in Draufsicht bzw. Seitenansicht,
- Fig. 4a und 4b die Anordnung des metallenen Spleißgehäuses beim Endverschluß um den Kabelmantel bzw. bei der Verbindungsmuffe um das Muffenrohr, beide Figuren im Querschnitt, und
- Fig. 5a und 5b ein gebogenes LWL-Spleißgehäuse aus Kunsstoff in Schrägansicht und Querschnitt.

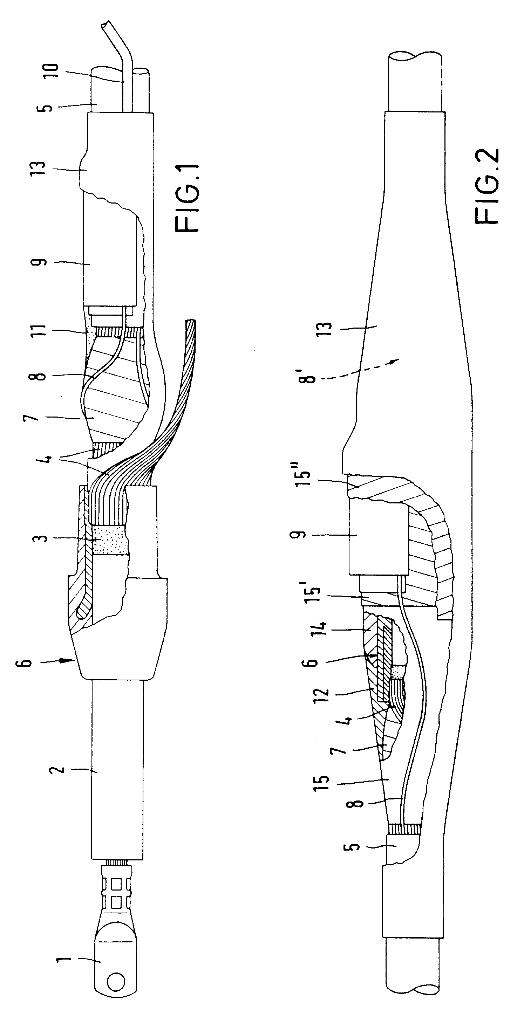

Fig. 1 zeigt das Ende eines Einleiter-Kabels mit der Leiterisolierung 2 aus VPE (vernetztem Polyethylen), der äußeren Leitschicht 3, dem Schirm 4 aus Cu-Drähten und dem Kabelmantel 5. In den Kabelschirm 4 ist ein Schutzröhrchen 8 aus Edelstahl eingeseilt, in das mehrere LWL (Lichtwellenleiter) lose eingelegt sind. Zur Bildung des üblichen Energiekabel-Endverschlusses ist auf das stufenweise abgesetzte Kabelende der Feldsteuerkörper 6 aus Silikonkautschuk aufgeschoben und auf das Leiterende der Kabelschuh 1 aufgepreßt.

Der LWL-Endverschluß ist nun so ausgebildet, daß kabelseitig neben dem Feldsteuerkörper 6 um den freigelegten Kabelschirm 4 der konische Hilfswickel 7 aus Füllband aufgebracht und hierüber das LWL-Röhrchen 8 zu dem Spleißgehäuse 9 hin umgelenkt ist, worin die Spleiße und Mehrlängen der LWL untergebracht sind. Das Spleißgehäuse 9 ist kabelseitig neben dem Hilfswickel 7 um das Ende des Kabelmantel 5 als ein flaches und längliches, einen Teil des Umfangs umfassendes Gehäuse gebogen. Der Zwickel zwischen dem Hilfswickel und dem Spleißgehäuse ist mit einer Dichtmasse 11 ausgefüllt. Darüber ist der Schrumpfschlauch 13 aufgebracht, der endseitig unter den Fuß des Feldsteuerkörpers 6 greift und kabelseitig den Mantel 5 des MSL-Kabels sowie das Ende des LWL-Anschlußkabels 10 umfaßt.

Fig. 2 zeigt eine Verbindungsmuffe für zwei MSL-Kabel, die so ausgebildet ist, daß auf jedes abgesetzte Ende der beiden Kabel der Feldsteuerkörper 6 aufgeschoben, kabelseitig neben ihm der Hilfswickel 7 aufgebracht, der Zwickel zwischen diesen und dem Muffenrohr 14 mit dem Ausgleichswickel 12 ausgefüllt und darüber die Abdeckwicklung 15 aufgebracht ist. Hierüber ist das jeweilige LWL-Röhrchen 8 bzw. 8′ aus dem Kabelschirm 4 ausgelenkt und zu dem Spleißgehäuse 9 geführt, das um das Muffenrohr 14 gebogen und von der das Gehäuse umfassenden Wicklung 15˝ festgehalten ist. Abschließend ist über die gesamte Muffe der Schrumpfschlauch 13 aufgebracht.

Es ist auch möglich, daß das Spleißgehäuse 9 nicht auf dem Muffenrohr 14, sondern auf einer anderen Muffenkonstruktion oder wie beim Endverschluß neben einem der Hilfswickel 7 auf dem Kabelmantel 5 montiert wird. Dabei wird der Gesamtdurchmesser der Muffe zu Lasten der Gesamtlänge verringert. Und schließlich kann das LWL-Spleißgehäuse 9 unabhängig von der Mittelspannungs-Kabelgarnitur auf dem Kabelmantel 5 montiert werden, wenn nur eine LWL-Spleissung, beispielsweise zum Anschluß eines LWL-Gerätes oder zu einer LWL-Reparatur, vorzunehmen ist.

Die Fig. 2 zeigt weiter, daß bei dem Spleißgehäuse 9 aus Metall unter diesem die Abdichtwicklung 15′ und über diesem die Wicklung 15˝ zum Festhalten und Abdichten des Gehäuses angeordnet ist.

Beide Wicklungen sind aus selbstverschweißendem EPR-(Ethylen-Propylen-Rubber-)Band (Schweißband).

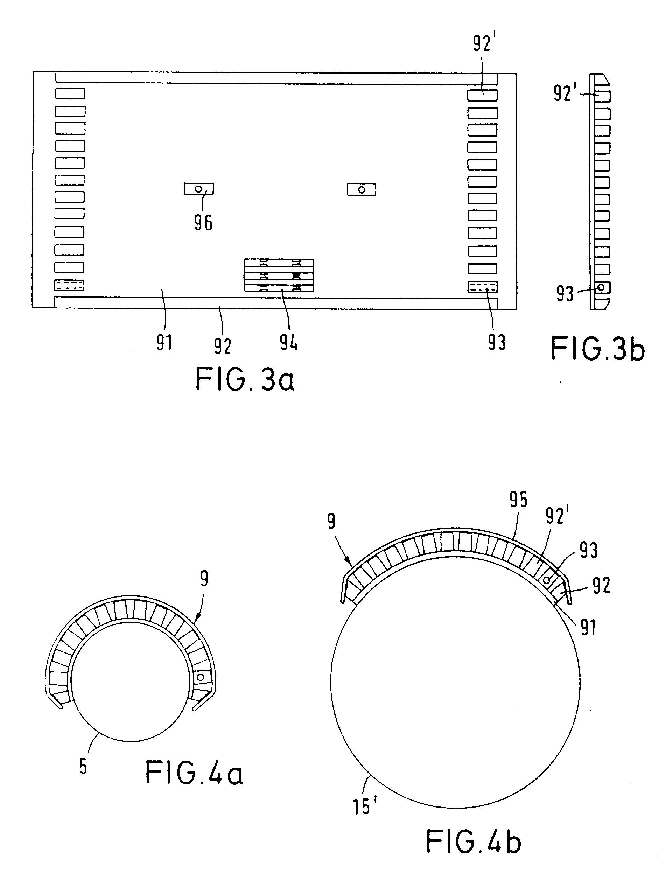

Die Fig. 3a und 3b zeigen ein noch nicht gebogenes LWL-Spleißgehäuse aus Metall ohne Abdeckplatte, das wie folgt ausgebildet ist: a) rechteckige, um die Längsachse biegbare, Bodenplatte 91 aus Metall, beispielsweise aus Cu- oder Messingblech, b) darauf an allen Seiten Stege 92, 92′ zum Tragen der Abdeckplatte und c) in der Mitte eine Reihe von Spleißhaltern 94 und zwei Stege 96 mit Gewindebuchsen zum Abstützen und Anschrauben der Abdeckplatte. Die Bodenplatte 91 ragt an jeder Querseite um etwa 5 % ihrer Länge über die Querstege 92′ hinaus, und zwei Querstege haben eine Bohrung 93 für die LWL-Röhrchen 8 und 8′ (bei der Muffe, beim Endverschluß für das LWL-Röhrchen 8 und die LWL-Anschlußleitung). Jedes LWL-Röhrchen ist mittels Kleber oder Schrumpfschlauch am Spleißgehäuse fixiert. Die Spleißhalter 94 sind hier aus Kunststoff und auf die Bodenplatte 91 geklebt, und jeder über einem LWL-Spleiß befindliche, mit einer Kunststoffhülle ausgebildete Spleißschutz ist in einem der Spleißhalter 94 eingeklemmt oder eingeklebt.

Die Fig. 4a und 4b zeigen die Anordnung des metallenen Spleißgehäuses 9 beim Endverschluß um den Kabelmantel 5 bzw. bei der Verbindungsmuffe um das Muffenrohr 14 (mit der über dem Rohr liegenden Abdichtwicklung 15′). Hieraus ist zu ersehen, daß die Abdeckplatte 95 über die beiden Längsstege 92 nach außen übergreift und abgekantet ist, was das Aufsetzen, Festlegen und Abdichten der Abdeckplatte begünstigt.

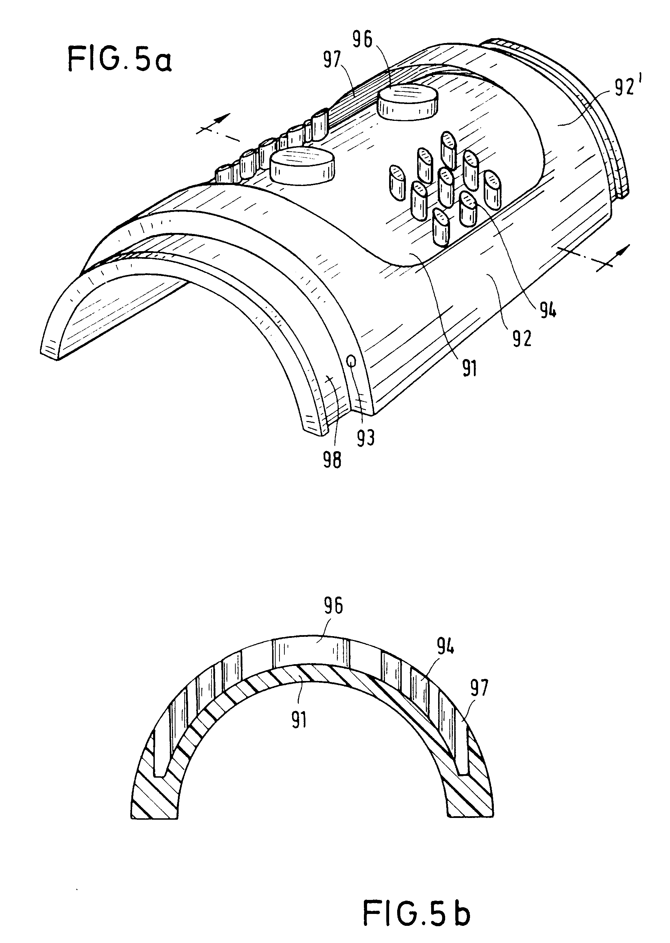

Schließlich zeigen die Fig. 5a und 5b die Ausführung des Spleißgehäuses 9 aus einem elastomeren Kunststoff, die sich gegenüber der Ausführung aus Metall durch eine noch einfachere Fertigung und vielseitigere Einsatzmöglichkeit auszeichnet. Hier ist die Bodenplatte 91 samt deren Anformungen (den Stegen 92, 92′ und 96 und den Spleißhaltern 94), die zusammen das offene Spleißgehäuse bilden, in einem Stück aus Silikonkautschuk gegossen, wobei die schmalen seitlichen Stege 92 und 92′ in einen zusammenhängenden, breiten, erhabenen Plattenrand umgebildet sind.

Der Plattenrand 92, 92′ hat innen rundum eine Hinterschneidung 97, worin die Mehrlängen der Lichtwellenleiter festgelegt oder festgeklemmt sind. Jeder Querrand 92′ hat mindestens ein Loch 93 für die selbstdichtende Durchführung der LWL-Röhrchen 8 und 8′. Diese Löcher werden nach Bedarf durch den Gehäußerand gestoßen, und dieser dichtet die Durchführung selbsttätig ab. Der über jeden Querrand 92′ hinausragende Teil der Bodenplatte 91 ist als Rinne 98 ausgebildet, wohin einer der beiden Wickel zum Festlegen des Spleißgehäuses auf dem Kabel, beispielsweise auf der Muffe, gelegt wird.

Schließlich ist auf das Silikon-Spleißgehäuse als Abdeckplatte 95 ein Aluminiumblech mittels Silikonklebstoff aufgeklebt, was außer der Abdichtung auch einen mechanischen Schutz bringt. Der Silikonklebstoff vernetzt unter dem äußeren Schrumpfschlauch 13.

Diese Gehäuseausführung ermöglicht es, daß einander völlig gleiche Elastomer-Spleißgehäuse auf Kabeln verschiedener Außendurchmesser montiert werden können, so beispielsweise ein vorgebogenes Gehäuse, dessen Öffnung (wie in Fig. 5b) 65 mm weit und 35 mm hoch ist, auf Kabeln eines Durchmesserbereichs von 40 bis 100 mm. Bei Kabeln kleineren Durchmessers wird zwischen Kabel und Spleißgehäuse eine Aufpolsterung mit Schweißband eingefügt.

Die vorstehend beschriebenen LWL-Spleißgehause können auch unabhängig von der MSL-Kabelgarnitur verwendet werden, wenn nur eine LWL-Spleißung, etwa zum Anschluß eines LWL-Gerätes oder zu einer LWL-Reparatur, vorzunehmen ist. Dazu wird einfach das LWL-Spleißgehäuse 9 samt den Hilfswickeln zum Auslenken der LWL ohne die Teile der Mittelspannungs-Kabelgarnitur auf dem Kabelmantel 5 montiert.

### Bezugszeichenliste:

- 1: Kabelschuh auf dem Leiterende
- 2: Leiterisolierung aus VPE
- 3: Äußere Leitschicht
- 4: Schirm aus Cu-Drähten
- 5: Kabelmantel
- 6: Aufschiebbarer Feldsteuerkörper aus Silikonkautschuk
- 7: Hilfswickel aus Füllband um den Schirm
- 8: LWL-Röhrchen aus Edelstahl mit lose eingelegten LWL
- 9: LWL-Spleißgehäuse mit Abdeckplatte
- 91: Bodenplatte aus Metall (Cu-Blech) oder Kunststoff (Silikonkautschuk)
- 92: Stege aus Metall oder Plattenrand aus Kunststoff an den Plattenlängsseiten
- 92′: desgleichen an den Plattenquerseiten
- 93: Bohrung oder Loch für LWL-Röhrchen
- 94: Spleißhalter
- 95: Abdeckplatte aus Metall
- 96: Stege zum Abstützen der Abdeckplatte
- 97: Hinterschneidung im Kunststoffgehäuse zum Einlegen der LWL
- 98: Rinne im Kunststoffgehäuse zum Auflegen des Haltewickels
- 10: LWL-Anschlußkabel
- 11: Dichtmasse
- 12: Ausgleichswickel aus Füllband oder Füllmasse
- 13: Schrumpfschlauch
- 14: Muffenrohr
- 15: Abdeckwicklung
- 15′: Abdichtwicklung aus Schweißband (EPR-Band) unter dem metallenen LWL-Spleißgehäuse
- 15˝: Halte- und Abdichtwicklung über dem LWL-Spleißgehäuse.

## Patentansprüche (Patentansprüche für folgende(n) Vertragsstaat(en): AT, BE, CH, ES, FR, GB, IT, LI, NL, SE)

1. Aufschiebbare Garnitur (Endverschluß oder Verbindungsmuffe) für kunststoffisolierte Mittelspannungskabel mit mehreren integrierten Lichtwellenleitern (MSL-Kabel), wobei das Kabel mindestens ein im Schirm (4) eingeseiltes Schutzröhrchen (8) hat, in das mehrere Lichtwellenleiter (LWL) lose eingelegt sind, und auf das jeweilige, stufenweise abgesetzte Kabelende ein Feldsteuerkörper (6) aus Silikonkautschuk aufgeschoben ist, **dadurch gekennzeichnet**, daß kabelseitig neben dem Feldsteuerkörper (6) um den freigelegten Kabelschirm (4) ein konischer Hilfswickel (7) aufgebracht und hierüber jedes LWL-Röhrchen (8, 8′) zu einem Spleißgehäuse (9) hin um-oder ausgelenkt ist, das kabelseitig neben dem Hilfswickel (7) um den Kabelmantel (5) oder um ein Muffenrohr (14) als ein flaches und längliches, einen Teil des Umfangs umfassendes, biegbares Gehäuse (9) angeordnet ist, in dem die Spleiße und Mehrlängen der LWL untergebracht sind.

2. Garnitur für MSL-Kabel nach Anspruch 1, **dadurch gekennzeichnet**, daß bei einem Endverschluß das LWL-Spleißgehäuse (9) auf dem Ende des MSL-Kabelmantels (5) angeordnet ist und darüber ein Schrumpfschlauch (13) aufgebracht ist, der endseitig unter den Fuß des Feldsteuerkörpers (6) greift und kabelseitig den Mantel (5) des MSL-Kabels sowie das Ende des LWL-Anschlußkabels (10) umfaßt (Fig. 1).

3. Garnitur für MSL-Kabel nach Anspruch 1, **dadurch gekennzeichnet**,
- daß bei einer Verbindungsmuffe auf jedes Kabelende der Feldsteuerkörper (6) und der Hilfswickel (7) aufgebracht sind, der Zwickel zwischen diesen und dem Muffenrohr (14) mit einem Ausgleichswickel (12) ausgefüllt ist und darüber eine Abdeckwicklung (15) aufgebracht ist,
- daß hierüber das jeweilige LWL-Röhrchen (8, 8′) ausgelenkt und zum Spleißgehäuse (9) geführt ist, das um das Muffenrohr (14) oder um den Kabelmantel (5) gebogen und von einer das Gehäuse umfassenden Wicklung (15˝) festgehalten ist,
- und daß abschließend über die gesamte Muffe ein Schrumpfschlauch (13) aufgebracht ist (Fig. 2).

4. Garnitur für MSL-Kabel nach Anspruch 3, **dadurch gekennzeichnet**, daß bei einem Spleißgehäuse (9) aus Metall unter diesem eine Abdichtwicklung (15′) und über diesem eine Wicklung (15˝) zum Festhalten und Abdichten des Gehäuses, beide aus selbstverschweißendem EPR-Band, angeordnet sind.

5. Garnitur für MSL-Kabel nach einem der Ansprüche 1 bis 4, **dadurch gekennzeichnet**, daß das Spleißgehäuse (9) samt seiner Abdeckplatte wie folgt ausgebildet ist:
- rechteckige, um die Längsachse gebogene, vorzugsweise biegbare, Bodenplatte (91) aus Metall oder Kunststoff,
- darauf an allen Seiten Stege (92, 92′) zum Tragen der Abdeckplatte (95),
- in der Mitte der Bodenplatte eine Reihe von Spleißhaltern (94) und weitere Stege (96) zum Abstützen der Abdeckplatte,
- und darüber eine aufschiebbare und/oder anschraubbare Abdeckplatte (95) (Fig. 3a bis 4b).

6. Garnitur für MSL-Kabel nach Anspruch 5, **dadurch gekennzeichnet**,
- daß die Bodenplatte (91) an jeder Querseite um etwa 5 % ihrer Länge über die Stege (92′) hinausragt und mindestens zwei Querstege (92′) eine Bohrung (93) für die LWL-Röhrchen (8, 8′) haben,
- und daß die Abdeckplatte (95) über die beiden Längsstege (92) nach außen übergreift und abgekantet ist.

7. Garnitur für MSL-Kabel nach Anspruch 5 oder 6, **dadurch gekennzeichnet**, daß die Bodenplatte (91) samt deren Anformungen, wie den Stegen (92, 92′, 96) und den Spleißhaltern (94), die zusammen das offene Spleißgehäuse bilden, in einem Stück aus einem elastomeren Kunststoff gefertigt, vorzugsweise aus Silikonkautschuk gegossen ist, wobei die schmalen seitlichen Stege in einen zusammenhängenden, breiten, erhabenen Plattenrand umgebildet sind (Fig. 5a und 5b).

8. Garnitur für MSL-Kabel nach Anspruch 7, **dadurch gekennzeichnet**,
- daß der Plattenrand (92, 92′) innen rundum eine Hinterschneidung (97) zum Ein- und Festlegen der LWL hat,
- daß jeder Querrand (92′) mindestens ein Loch (93) für die selbstdichtende Durchführung der LWL-Röhrchen (8, 8′) hat,
- und daß der über jeden Querrand (92′) hinausragende Teil der Bodenplatte (91) als Rinne (98) zur Aufnahme eines Haltewickels ausgebildet ist.

9. Garnitur für MSL-Kabel nach Anspruch 7 oder 8, **dadurch gekennzeichnet**, daß auf das Silikon-Spleißgehäuse (9) als Abdeckplatte (95) ein Aluminiumblech mittels Silikonklebstoff aufgeklebt ist.

10. Garnitur für MSL-Kabel nach einem der Ansprüche 7 bis 9, **dadurch gekennzeichnet**,
- daß einander völlig gleiche Elastomer-Spleißgehäuse auf Kabeln verschiedener Außendurchmesser montierbar sind, beispielsweise ein vorgebogenes Gehäuse, dessen Öffnung 65 mm weit und 35 mm hoch ist (Fig. 5b), auf Kabeln eines Durchmesserbereichs von 40 bis 100 mm,
- und daß bei Kabeln kleineren Durchmessers zwischen Kabel und Spleißgehäuse eine Aufpolsterung mit Schweißband angeordnet ist.

11. Garnitur für MSL-Kabel nach einem der vorhergehenden Ansprüche, **dadurch gekennzeichnet**, daß das LWL-Spleißgehäuse (9) zum Zweck einer alleinigen LWL-Spleißung ohne die Teile der Mittelspannungs-Kabelgarnitur auf dem Kabelmantel (5) montiert ist.

## Patentansprüche (Patentansprüche für folgende(n) Vertragsstaat(en): DE)

1. Aufschiebbare Garnitur (Endverschluß oder Verbindungsmuffe) für kunststoffisolierte Mittelspannungskabel mit mehreren integrierten Lichtwellenleitern (MSL-Kabeln), wobei das Kabel mindestens ein im Schirm (4) eingeseiltes Schutzröhrchen (8) hat, in das mehrere Lichtwellenleiter (LWL) lose eingelegt sind, und auf das jeweilige, stufenweise abgesetzte Kabelende ein Feldsteuerkörper (6) aus Silikonkautschuk aufgeschoben ist, und neben diesem (6) kabelseitig um den freigelegten Kabelschirm (4) ein konischer Hilfswickel (7) aufgebracht und hierüber jedes LWL-Röhrchen (8, 8') zu einem Spleißgehäuse (9) hin um- oder ausgelenkt ist, das, Spleiße und Mehrlängen der LWL aufnehmend, flach und länglich ausgebildet und biegsam ist, **dadurch gekennzeichnet**, daß das Spleißgehäuse (9) kabelseitig neben dem Hilfswickel (7) an dem Kabelmantel (5) oder an einem Muffenrohr (14), einen Teil des jeweiligen Umfanges umfassend, angeordnet ist.

2. Garnitur für MSL-Kabel nach Anspruch 1, **dadurch gekennzeichnet**, daß bei einem Endverschluß das LWL-Spleißgehäuse (9) auf dem Ende des MSL-Kabelmantels (5) angeordnet ist und darüber ein Schrumpfschlauch (13) aufgebracht ist, der endseitig unter den Fuß des Feldsteuerkörpers (6) greift und kabelseitig den Mantel (5) des MSL-Kabels sowie das Ende des LWL-Anschlußkabels (10) umfaßt (Fig. 1).

3. Garnitur für MSL-Kabel nach Anspruch 1, **dadurch gekennzeichnet**,
- daß bei einer Verbindungsmuffe auf jedes Kabelende der Feldsteuerkörper (6) und der Hilfswickel (7) aufgebracht sind, der Zwickel zwischen diesen und dem Muffenrohr (14) mit einem Ausgleichswickel (12) ausgefüllt ist und darüber eine Abdeckwicklung (15) aufgebracht ist,
- daß hierüber das jeweilige LWL-Röhrchen (8, 8') ausgelenkt und zum Spleißgehäuse (9) geführt ist, das um das Muffenrohr (14) oder um den Kabelmantel (5) gebogen und von einer das Gehäuse umfassenden Wicklung (15'') festgehalten ist,
- und daß abschließend über die gesamte Muffe ein Schrumpfschlauch (13) aufgebracht ist (Fig. 2).

4. Garnitur für MSL-Kabel nach Anspruch 3, **dadurch gekennzeichnet**, daß bei einem Spleißgehäuse (9) aus Metall unter diesem eine Abdichtwicklung (15') und über diesem eine Wicklung (15'') zum Festhalten und Abdichten des Gehäuses, beide aus selbstverschweißendem EPR-Band, angeordnet sind.

5. Garnitur für MSL-Kabel nach einem der Ansprüche 1 bis 4, **dadurch gekennzeichnet**, daß das Spleißgehäuse (9) samt seiner Abdeckplatte wie folgt ausgebildet ist:
- rechteckige, um die Längsachse gebogene, vorzugsweise biegbare, Bodenplatte (91) aus Metall oder Kunststoff,
- darauf an allen Seiten Stege (92, 92') zum Tragen der Abdeckplatte (95),
- in der Mitte der Bodenplatte eine Reihe von Spleißhaltern (94) und weitere Stege (96) zum Abstützen der Abdeckplatte,
- und darüber eine aufschiebbare und/oder anschraubbare Abdeckplatte (95) (Fig. 3a bis 4b).

6. Garnitur für MSL-Kabel nach Anspruch 5, **dadurch gekennzeichnet**,
- daß die Bodenplatte (91) an jeder Querseite um etwa 5% ihrer Länge über die Stege (92' hinausragt und mindestens zwei Querstege (92') eine Bohrung (93) für die LWL-Röhrchen (8, 8') haben,
- und daß die Abdeckplatte (95) über die beiden Längsstege (92) nach außen übergreift und abgekantet ist.

7. Garnitur für MSL-Kabel nach Anspruch 5 oder 6, **dadurch gekennzeichnet**, daß die Bodenplatte (91) samt den Anformungen, wie den Stegen (92, 92', 96) und den Spleißhaltern (94), die zusammen das offene Spleißgehäuse bilden, in einem Stück aus einem elastomeren Kunststoff gefertigt, vorzugsweise aus Silikonkautschuk gegossen ist, wobei die schmalen seitlichen Stege in einen zusammenhängenden, breiten, erhabenen Plattenrand umgebildet sind (Fig. 5a und 5b).

8. Garnitur für MSL-Kabel nach Anspruch 7, **dadurch gekennzeichnet**,
- daß der Plattenrand (92, 92') innen rundum eine Hinterschneidung (97) zum Ein- und Festlegen der LWL hat,
- daß jeder Querrand (92') mindestens ein Loch (93) für die selbstdichtende Durchführung der LWL-Röhrchen (8, 8') hat,
- und daß der über jeden Querrand (92') hinausgehende Teil der Bodenplatte (91) als Rinne (98) zur Aufnahme eines Haltewickels ausgebildet ist.

9. Garnitur für MSL-Kabel, **dadurch gekennzeichnet**, daß auf das Silikon-Spleißgehäuse (9) als Abdeckplatte (95) ein Aluminiumblech mittels Silikonklebstoff aufgeklebt ist.

10. Garnitur für MSL-Kabel nach Anspruch 7 oder 8**, dadurch gekennzeichnet**,
- daß einander völlig gleiche Elastomer-Spleißgehäuse auf Kabeln verschiedener Außendurchmesser montierbar sind, beispielsweise ein verbogenes Gehäuse, dessen Öffnung 65 mm weit und 35 mm hoch ist (Fig. 5), auf Kabeln eines Durchmesserbereiches von 40 bis 100 mm,
- und daß bei Kabeln kleineren Durchmessers zwischen Kabel und Spleißgehäuse eine Aufpolsterung mit Schweißband angeordnet ist.

11. Garnitur für MSL-Kabel nach einem der vorhergehenden Ansprüche, **dadurch gekennzeichnet**, daß das LWL-Spleißgehäuse (9) zum Zweck einer alleinigen LWL-Spleißung ohne die Teile der Mittelspannungs- Kabelgarnitur auf dem Kabelmantel (5) montiert ist.

## Claims (Claims for the following Contracting State(s): AT, BE, CH, ES, FR, GB, IT, LI, NL, SE)

1. A sliding fitting (end piece or coupling sleeve) for plastic-insulated medium voltage cable having multiple integrated optical fibre conductors (MVC cable), said cable having at least one protective conduit (8) which is laid in the sheath (4) and into which multiple optical fibre conductors (OFCs) are loosely inserted, and having a field control body (6) made of silicone rubber slipped onto the respective, gradually stepped cable end, **characterised in that** a conical auxiliary winding (7) is placed on the cable side next to the field control body (6) around the exposed cable sheath (4) and each OFC conduit (8, 8') is guided or deflected over this to a splice case (9) which is positioned on the cable side next to the auxiliary winding (7) around the cable cover (5) or around a coupler tube (14) in the form of a flat, oblong, flexible case (9) which envelops a portion of the circumference and in which the splices and multiple lengths of the OFCs are housed.

2. A fitting for MVC cable as claimed in Claim 1, **characterised in that**, for an end piece, the OFC splice case (9) is positioned on the end of the MVC cable cover (5) and over this is fitted a heat-shrinkable sleeve (13) which, on the end side, grips under the base of the field control body (6) and, on the cable side, envelope the cover (5) of the MVC cable and the end of the OFC connecting cable (10) (Fig.1).

3. A fitting for MVC cable as claimed in Claim 1, **characterised in that**:
- for a coupling sleeve, the field control body (6) and the auxiliary winding (7) are fitted onto each cable end, the wedge between these and the coupler tube (14) is filled with a balance winding (12), and over this is fitted a cover winding (15),
- over this the respective OFC conduit (8, 8') is deflected and run to the splice case (9) which is arched around the coupler tube (14) or the cable cover (5) and secured by a winding (15'') enveloping the case,
- and, finally, in that a heat-shrinkable sleeve (13) is fitted over the entire coupler (Fig.2).

4. A fitting for MVC cable as claimed in Claim 3, **characterised in that**, where the splice case (9) is made of metal, a sealant winding (15') is positioned under it and a winding (15'') is positioned over it to secure and seal the case, both windings being made of self-sealing EPR tape.

5. A fitting for MVC cable as claimed in one of Claims 1 to 4, **characterised in that** the splice case (9) together with its cover plate is of the following design:
- rectangular base plate (91) made of metal or plastic, arched around its longitudinal axis and preferably flexible,
- thereon, on all sides, fins (92, 92') to support the cover plate (95),
- in the centre of the base plate a row of splice holders (94) and more fins (96) to support the cover plate,
- and thereover a sliding and/or screw-on cover plate (95) (Figs 3a to 4b).

6. A fitting for MVC cable as claimed in Claim 5, **characterised in that**:
- on each short side the base plate (91) projects by approximately 5% of its length past the fins (92') and at least two transverse fins (92') have a bore (93) for the OFC conduits (8, 8'),
and in that the cover plate (95) overlaps the outside of the two longitudinal fins (92) and is chamfered.

7. A fitting for MVC cable as claimed in Claim 5 or Claim 6, **characterised in that** the base plate (91) together with the formations thereon, such as the fins (92, 92', 96) and the splice holders (94), which together form the open splice case, is made from an elastomeric plastic in one piece, preferably cast from silicone rubber, the narrow lateral fins being transformed into a continuous, broad, raised plate border (Figs 5a and 5b).

8. A fitting for MVC cable as claimed in Claim 7, **characterised in that**:
- the plate border (92, 92') has, all the way round on the inside, an undercut (97) in which to insert and secure the OFCs,
- each transverse border (92') has at least one hole (93) for the self-sealing feed-through of the OFC conduits (8, 8'),
- and in that the portion of the base plate (91) that projects past each transverse border (92') is designed as a groove (98) to take a restraining winding.

9. A fitting for MVC cable as claimed in Claim 7 or Claim 8, **characterised in that** an aluminium sheet is glued onto the silicone splice case (9) as a cover plate (95) using silicone adhesive.

10. A fitting for MVC cable as claimed in one of Claims 7 to 9, **characterised in that**:
- absolutely identical elastomer splice cases can be fitted on cables of different external diameters, for example a pre-arched case with a span 65 mm wide and 35 mm high (Fig.5b) can be fitted on cable with a diameter range of 40 to 100 mm,
- and in that, with cable of smaller diameter, padding with sealing tape is positioned between cable and splice case.

11. A fitting for MVC cable as claimed in one of the preceding Claims, **characterised in that** the OFC splice case (9) is fitted on the cable cover (5) without the parts of the medium voltage cable fitting for the purpose of a sole OFC splicing.

## Claims (Claims for the following Contracting State(s): DE)

1. A sliding fitting (end piece or coupling sleeve) for plastic-insulated medium voltage cable having multiple integrated optical fibre conductors (MVC cables), said cable having at least one protective conduit (8) which is looped in the sheath (4) and into which multiple optical fibre conductors (OFCs) are loosely inserted, and having a field control body (6) made of silicone rubber slipped onto the respective, gradually stepped cable end, a conical auxiliary winding (7) being placed next to said body (6) on the cable side around the exposed cable sheath (4) and each OFC conduit (8, 8') being guided or deflected over this to a splice case (9) which, housing splices and multiple lengths of the OFCs, is of a flat, oblong design and is pliable, **characterised in that** the splice case (9) is positioned on the cable side next to the auxiliary winding (7) on the cable cover (5) or on a coupler tube (14), enveloping a portion of the respective circumference.

2. A fitting for MVC cable as claimed in Claim 1, **characterised in that**, for an end piece, the OFC splice case (9) is positioned on the end of the MVC cable cover (5) and over this is fitted a heat-shrinkable sleeve (13) which, on the end side, grips under the base of the field control body (6) and, on the cable side, envelops the cover (5) of the MVC cable and the end of the OFC connecting cable (10) (Fig.1).

3. A fitting for MVC cable as claimed in Claim 1, **characterised in that**:
- for a coupling sleeve, the field control body (6) and the auxiliary winding (7) are fitted onto each cable end, the wedge between these and the coupler tube (14) is filled with a balance winding (12), and over this is fitted a cover winding (15),
- over this the respective OFC conduit (8, 8') is deflected and run to the splice case (9) which is arched around the coupler tube (14) or the cable cover (5) and secured by a winding (15'') enveloping the case,
- and, finally, in that a heat-shrinkable sleeve (13) is fitted over the entire coupler (Fig.2).

4. A fitting for MVC cable as claimed in Claim 3, **characterised in that**, where the splice case (9) is made of metal, a sealant winding (15') is positioned under it and a winding (15'') is positioned over it to secure and seal the case, both windings being made of self-sealing EPR tape.

5. A fitting for MVC cable as claimed in one of Claims 1 to 4, **characterised in that** the splice case (9) together with its cover plate is of the following design:
- rectangular base plate (91) made of metal or plastic, arched around its longitudinal axis and preferably flexible,
- thereon, on all sides, fins (92, 92') to support the cover plate (95),
- in the centre of the base plate, a row of splice holders (94) and more fins (96) to support the cover plate,
- and thereover a sliding and/or screw-on cover plate (95) (Figs 3a to 4b).

6. A fitting for MVC cable as claimed in Claim 5, **characterised in that**:
- on each short side the base plate (91) projects by approximately 5% of its length over the fins (92') and at least two transverse fins (92') have a bore (93) for the OFC conduits (8, 8'),
and in that the cover plate (95) overlaps the outside of the two longitudinal fins (92) and is chamfered.

7. A fitting for MVC cable as claimed in Claim 5 or Claim 6, **characterised in that** the base plate (91) together with the formations thereon, such as the fins (92, 92', 96) and the splice holders (94), which together form the open splice case, is made from an elastomeric plastic in one piece, preferably cast from silicone rubber, the narrow lateral fins being transformed into a continuous, broad, raised plate edge (Figs 5a and 5b).

8. A fitting for MVC cable as claimed in Claim 7, **characterised in that**:
- the plate edge (92, 92') has, all the way round on the inside, an undercut (97) in which to insert and secure the OFCs,
- each transverse edge (92') has at least one hole (93) for the self-sealing feed-through of the OFC conduits (8, 8'),
- and in that the portion of the base plate (91) that projects over each transverse edge (92') is designed as a groove (98) to take a restraining winding.

9. A fitting for MVC cable, **characterised in that** an aluminium sheet is glued onto the silicone splice case (9) as a cover plate (95) using silicone adhesive.

10. A fitting for MVC cable as claimed in Claim 7 or Claim 8, **characterised in that**:
- absolutely identical elastomer splice cases can be fitted on cables of different external diameters, for example a bent case with a span 65 mm wide and 35 mm high (Fig.5) can be fitted on cable with a diameter range of 40 to 100 mm,
- and in that, with cable of smaller diameter, padding with sealing tape is positioned between cable and splice case.

11. A fitting for MVC cable as claimed in one of the preceding Claims, **characterised in that** the OFC splice case (9) is fitted on the cable cover (5) without the parts of the medium voltage cable fitting for the purpose of a sole OFC splicing.

## Revendications (Revendications pour l'(les) Etat(s) contractant(s) suivant(s): AT, BE, CH, ES, FR, GB, IT, LI, NL, SE)

1. Garniture enfilable (fermeture terminale ou manchon de liaison) pour câbles à moyenne tension isolés par des matières plastiques avec plusieurs guides d'ondes lumineuses intégrés (câbles MSL), garniture dans laquelle le câble a au moins un petit tube de protection (8) enserré dans le blindage (4), dans lequel plusieurs guides d'ondes lumineuses (LWL) sont introduits de façon amovible et un corps de commande de champ (6) en caoutchouc au silicone est enfilé sur l'extrémité correspondante du câble, graduellement étagée, caractérisée en ce que du côté du câble près du corps de commande de champ (6) on met un bobinage auxiliaire conique (7) autour du blindage du câble (4) mis à nu et on déploie là dessus chaque petit tube de guide LWL (8,8') en direction d'un boîtier d'épissure (9) ou on les déroule ou enroule autour, boîtier qui est disposé du côté du câble à côté du bobinage auxiliaire (7) autour de l'enveloppe du câble (5) ou autour d'un tube de manchon (14) sous la forme d'un boîtier flexible plat et longitudinal, entourant une partie des pourtour, dans lequel les épissures et des longueurs de réserve des guides LWL sont logées.

2. Garniture pour câbles MSL selon la revendication 1, caractérisée en ce que dans le cas d'une fermeture terminale, ce boîtier d'épissure de guide LWL (9) est disposé sur l'extrémité de l'enveloppe du câble MSL (5) et là dessus est mis un tuyau de frettage (13), qui vient en prise du côté de l'extrémité sous le pied du corps de commande de champ (6) et du côté du câble entoure l'enveloppe (5) du câble MSL ainsi que l'extrémité du câble de raccordement LWL (10) (figure 1).

3. Garniture pour câbles MSL selon la revendication 1, caractérisée en ce que dans le cas d'un manchon de liaison, on met sur chaque extrémité de câble le corps de commande de champ (6) et le bobinage auxiliaire (7), on remplit le gousset entre celui-ci et le tube de manchon (14) avec un bobinage d'équilibrage (12) et là dessus on met un enroulement de recouvrement (15).
- là dessus on déploie le petit tube correspondant de guide LWL (8,8') et on l'amène au boîtier d'épissure (9), qui est recourbé autour du tube de manchon (14) ou autour de l'enveloppe du câble (5) et est maintenu par un enroulement (15'') entourant le boîtier.
- et enfin, on met sur tout le manchon un tuyau de frettage (13) (figure 2).

4. Garniture pour câbles MSL selon la revendication 3, caractérisée en ce que dans le cas d'un boîtier d'épissure (9) en métal, sont disposés sous celui-ci un enroulement d'étanchéité (15') et sur celui-ci un enroulement (15'') pour fixer le boîtier et assurer son étanchéité, les deux enroulements étant réalisés à l'aide d'une bande en caoutchouc éthylène propylène EPR auto-soudante.

5. Garniture pour câbles MSL selon l'une des revendications 1 à 4, caractérisée en ce que le boîtier d'épissure (9) ainsi que son couvercle est constitué comme suit :
- la plaque de fond (91) rectangulaire, recourbée autour de l'axe longitudinal, de préférence flexible est en métal ou en matière plastique
- il y a dessus de tous les côtés des entretoises (92, 92') pour porter le couvercle (95)
- au milieu de la plaque de fond, il y a une série de supports d'épissure (94) et d'autres entretoises (96) pour soutenir le couvercle.
- et au-dessus, il y a un couvercle (95) enfilable et/ou vissable (figures 3a à 4b).

6. Garniture pour câbles MSL selon la revendication 5, caractérisée en ce que la plaque de fond (91) dépasse les entretoises (92') sur chaque côté transversal d'environ 5 % de sa longueur et au moins deux entretoises transversales (92') ont un alésage (93) pour les petits tubes de guide LWL (8,8'), et le couvercle (95) vient en prise et est rabattu vers l'extérieur sur les deux entretoises longitudinales (92).

7. Garniture pour câbles MSL selon la revendication 5 ou 6, caractérisée en ce que la plaque de fond (91) ainsi que ses déformations, telles que les entretoises (92,92',96) et les supports d'épissures (94), qui forment ensemble le boîtier ouvert d'épissure, sont coulés dans une pièce en une matière synthétique élastomère, de préférence du caoutchouc au silicone, les entretoises latérales étroites étant transformées en un bord de plaque continu, large, convexe (figures 5a et 5b).

8. Garniture pour câbles MSL selon la revendication 7, caractérisée en ce que :
- le bord de plaque (92,92') a à l'intérieur tout autour une contre-dépouille (97) pour mettre en place et fixer le guide LWL.
- chaque bord transversal (92') a au moins un trou (93) pour le passage auto-étanche des petits tubes de guide LWL (8,8')
- et la partie de la plaque de fond (91) en saillie sur chaque bord transversal (92') est constituée comme une gouttière (98) pour recevoir un bobinage d'arrêt.

9. Garniture pour câbles MSL selon la revendication 7 ou 8, caractérisée en ce que sur le boîtier d'épissure en silicone (9) est collée, comme couvercle (95), une tôle d'aluminium au moyen d'une colle à base de silicone.

10. Garniture pour câbles MSL selon l'une des revendications 7 à 9, caractérisée en ce que :
- on peut monter des boîtiers d'épissure en élastomère exactement semblable l'un à l'autre sur des câbles de diamètre extérieur différent, par exemple un boîtier pré-recourbé, dont l'ouverture a environ 65 mm de large et 35 mm de haut (figure 5b) sur des câbles d'un diamètre allant de 40 à 100 mm.
- et dans le cas de câbles de plus petit diamètre, on dispose entre câble et boîtier d'épissure un rembourrage avec bande de soudage.

11. Garniture pour câbles MSL selon l'une des revendications précédentes, caractérisée en ce que le boîtier d'épissure de guide LWL (9) dans le but d'avoir une unique épissure de guide LWL est monté sans les parties de la garniture de câble à moyenne tension sur l'enveloppe du câble (5).

## Revendications (Revendications pour l'(les) Etat(s) contractant(s) suivant(s): DE)

1. Garniture enfilable (fermeture terminale ou manchon de liaison) pour câbles à moyenne tension isolés par des matières plastiques avec plusieurs guides d'ondes lumineuses intégrés (câbles MSL), garniture dans laquelle le câble a au moins un petit tube de protection (8) enserré dans le blindage (4), dans lequel plusieurs guides d'ondes lumineuses (LWL) sont introduits de façon amovible et un corps de commande de champ (6) en caoutchouc au silicone est enfilé sur l'extrémité correspondante du câble, graduellement étagée, et à côté de celle-ci (6) est disposé du côté du câble autour du blindage du câble (4) mis à nu, un bobinage auxiliaire conique (7) et au-dessus on enroule ou on déploie chaque petit tube de guide LWL (8,8') en direction d'un boîtier d'épissure (9), qui recevant des épissures et des longueurs de réserve du guide LWL est constitué de façon plate et longitudinale et est flexible, caractérisée en ce que le boîtier d'épissure (9) est disposé du côté du câble près du bobinage auxiliaire (7) sur l'enveloppe du câble (5) ou sur un tube de manchon (14), en entourant une partie du pourtour correspondant.

2. Garniture pour câbles MSL selon la revendication 1, caractérisée en ce que dans le cas d'une fermeture terminale, le boîtier d'épissure de guide LWL (9) est disposé sur l'extrémité de l'enveloppe du câble MSL (5) et dessus est mis un tuyau de frettage (13), qui du côté terminal vient en prise sous le pied du corps de commande de champ (6) et entoure du côté du câble l'enveloppe (15) du câble MSL ainsi que l'extrémité du câble de raccordement du guide LWL (10).

3. Garniture pour câbles MSL selon la revendication 1, caractérisée en ce que
- dans le cas d'un manchon de liaison sur chaque extrémité de câble sont disposés le corps de commande de champ (6) et le bobinage auxiliaire (7), le gousset entre ceux-ci et le tube de manchon (14) est rempli par un bobinage d'équilibrage (12) et dessus est mis un bobinage de recouvrement (15).
- dessus le petit tube correspondant de guide LWL (8,8') est déployé et amené au boîtier d'épissure (9), qui est recourbé autour du tube de manchon (14) ou autour de l'enveloppe du câble (5) et est maintenu par un bobinage (15'') entourant le boîtier.
- et enfin, on met sur tout le manchon un tuyau de frettage (13) (figure 2).

4. Garniture pour câbles MSL selon la revendication 3, caractérisée en ce que dans le cas d'un boîtier d'épissure (9) en métal sont disposés sous celui-ci un bobinage d'étanchéité (15') et au-dessus de celui-ci un bobinage (15'') servant à maintenir le boîtier et à assurer son étanchéité, les deux étant réalisés avec des bandes EPR (caoutchouc éthylène propylène) auto-soudantes.

5. Garniture pour câbles MSL selon l'une des revendications 1 à 4, caractérisée en ce que le boîtier d'épissure (9) ainsi que son couvercle est constitué comme suit :
- la plaque de fond (91) rectangulaire, recourbée autour de l'axe longitudinal, de préférence flexible est en métal ou en matière plastique
- il y a au-dessus de tous les côtés des entretoises (92, 92') pour porter le couvercle (95)
- au milieu de la plaque de fond, il y a une série de supports d'épissure (94) et d'autres entretoises (96) pour soutenir le couvercle.
- et dessus, il y a un couvercle (95) enfilable et/ou vissable (figures 3a à 4b).

6. Garniture pour câbles MSL selon la revendication 5, caractérisée en ce que
- la plaque de fond (91) dépasse sur chaque côté transversal d'environ 5 % de sa longueur les entretoises (92') et au moins deux entretoises transversales (92') ont un alésage (93) pour les petits tubes de guide LWL (8,8').
- et le couvercle (95) vient en prise et est rabattu vers l'extérieur sur les deux entretoises longitudinales (92).

7. Garniture pour câbles MSL selon la revendication 5 ou 6, caractérisée en ce que la plaque de fond (91) ainsi que ses déformations, telles que les entretoises (92,92',96) et les supports d'épissures (94), qui forment ensemble le boîtier ouvert d'épissure, sont coulés dans une pièce en une matière synthétique élastomère, de préférence du caoutchouc au silicone, les entretoises latérales étroites étant transformées en un bord de plaque continu, large, convexe (figures 5a et 5b).

8. Garniture pour câbles MSL selon la revendication 7, caractérisée en ce que :
- le bord de plaque (92,92') a à l'intérieur tout autour une contre-dépouille (97) pour mettre en place et fixer le guide LWL.
- chaque bord transversal (92') a au moins un trou (93) pour le passage auto-étanche des petits tubes de guide LWL (8,8')
- et la partie de la plaque de fond (91) en saillie sur chaque bord transversal (92') est constituée comme une gouttière (98) pour recevoir un bobinage d'arrêt.

9. Garniture pour câbles MSL selon la revendication 7 ou 8, caractérisée en ce que l'on colle sur le boîtier d'épissure en silicone (9), comme couvercle (95), une tôle d'aluminium au moyen d'une colle à base de silicone.

10. Garniture pour câbles MSL selon l'une des revendications 7 à 9, caractérisée en ce que :
- on peut monter des boîtes d'épissure en élastomère exactement semblable l'un à l'autre sur des câbles de diamètre extérieur différent, par exemple un boîtier recourbé, dont l'ouverture a environ 65 mm de large et 35 mm de haut (figure 5b) sur des câbles d'un diamètre allant de 40 à 100 mm.
- et dans le cas de câbles de plus petit diamètre, on dispose entre câble et boîtier d'épissure un rembourrage avec bande de soudage.

11. Garniture pour câbles MSL selon l'une des revendications précédentes, caractérisée en ce que le boîtier d'épissure de guide LWL (9) dans le but d'avoir une unique épissure de guide LWL est monté sans les parties de la garniture de câble à moyenne tension sur l'enveloppe du câble (5).
